# EUROPEAN PATENT APPLICATION

(11) **EP 1 229 369 A2**
(43) Date of publication of application: **07.08.2002**
(21) Application number: 02075387.7
(22) Date of filing: 31.01.2002
(51) Int. Cl.: G02B 6/44, G02B 6/50

(54) **Combined network member for gaseous fluid and optical fiber cable, components and combined network realization method**

(30) Priority: 01.02.2001 IT MI201184
(71) Applicant: Padovani S.p.A, 20090 Cusago (Milano) (IT)
(72) Inventor: Chizzoli, Edgardo, 20142 Milano (IT)
(74) Representative: Faraggiana, Vittorio, Dr. Ing.

(57) **Abstract**

A network member (10) comprises a tight fluid transport tube (11). On the wall of the tube there is a component (12) for sealed passage of an optical fiber cable (13) between the interior of the tube and the external environment for signal transport.

A method for communications network realization by means of an optical fiber cable comprises the steps of realizing a passage in the wall of a fluid transport tube, fitting the tube with a seal component at the passage, and inserting the cable in the passage opposite said seal component to utilize the tube for laying the cable.

## Description

The present invention relates to a combined network member for gaseous fluid and optical fiber cable. The present invention also relates to components and method of realization of combined networks.

In the realization of optical fiber communication networks the difficulty met with when optical fiber cables are to be laid are known and especially in a city environment because of the need to make the excavations necessary for burying the cables.

Apart from the operation costs it is ever more difficult to design the layouts because of the crowding of utilities, often not adequately marked, already present in the city underground.

In addition, especially in historical centers, it is ever more difficult to obtain the necessary excavation permits from the competent authorities.

The general purpose of the present invention is to remedy the above mentioned shortcomings by making available members, components and methods allowing laying of optical fiber cables with minimal work along the layout.

In view of this purpose it was sought to provide in accordance with the present invention a network member comprising a sealed fluid transport tube characterized in that on the wall of the tube there is a component for sealed passage between the interior of the tube and the exterior environment of an optical fiber cable for signal transport.

Again in accordance with the present invention it was sought to realize a component for sealed passage of an optical fiber cable through the wall of a fluid transport tube comprising a sleeve designed to be traversed by the optical fiber cable and having a first end designed to be connected in a sealed manner on the tube wall at a passage in the tube wall and a second end opposite the first for exit of the cable into the environment with said sleeve including seal means between the first and second ends. Again in accordance with the present invention it was sought to realize a method for the realization of a communications network by means of an optical fiber cable comprising the steps of realizing a passage in the wall of a fluid transport tube, fitting the tube with a seal component at the passage, and running the cable into the passage opposite said seal component to utilize the tube for laying the cable.

To clarify the explanation of the innovative principles of the present invention and its advantages compared with the prior art there is described below with the aid of the annexed drawings a possible embodiment thereof by way of non-limiting example applying said principles. In the drawings:
- FIG 1 shows a diagrammatic view of a network member in accordance with the present invention,
- FIG 2 shows an exploded view of a first embodiment of a component in accordance with the present invention,
- FIG 3 shows an assembled view of the component of FIG 2, and
- FIG 4 shows a second embodiment of a component in accordance with the present invention.

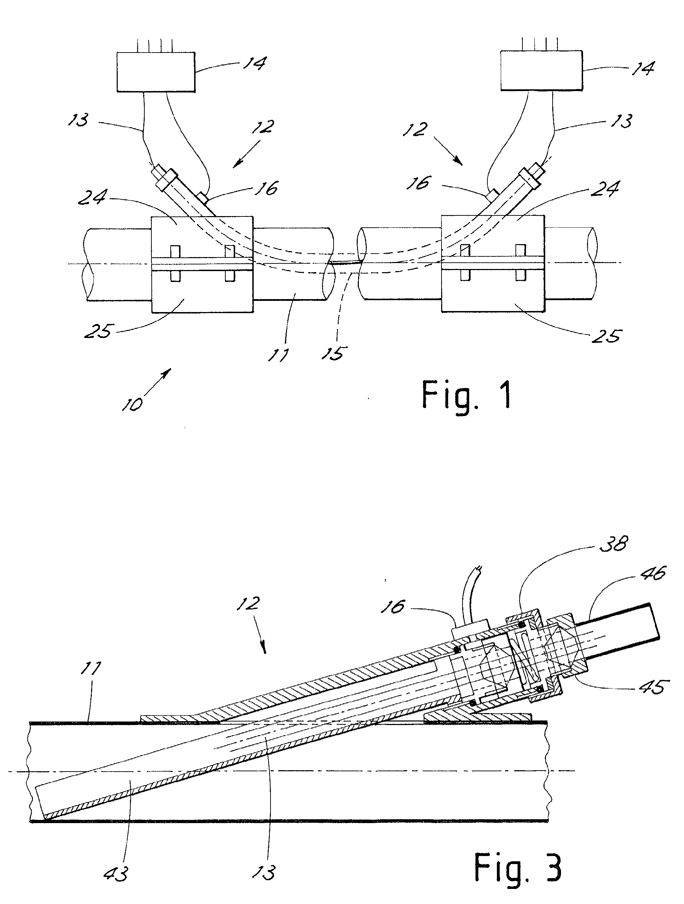

With reference to the figures, FIG 1 shows a network member designated as a whole by reference number 10 comprising a tight fluid transport tube 11 for example a tube for distribution of gas to dwellings in a city. On the wall of the tube 11 is a component 12 for sealed passage of an optical fiber cable 13 used for the signal transport between the interior of the tube and the external environment.

Advantageously the network member comprises at least two of said components 12 spaced along the tube for entry and exit of the cable to and from the tube near the members or stations 14 for processing and distribution of the cable transported signal. These members 14 are not further shown nor described as they virtually belong to the prior art and are readily imaginable to those skilled in the art.

As clarified below, in the tube between the two components 12 can be connected a duct 15 for housing the cable and isolating it from the interior of the tube. Again as clarified below, the seal components 12 advantageously have sensors 16 for detection of loss of seal. Very advantageously the sensors 16 send their signals over the same optical fiber cable 13. These signals are then detected by appropriate measurement, signaling and alarm stations (not shown) distributed along the network and incorporated or not in stations 14.

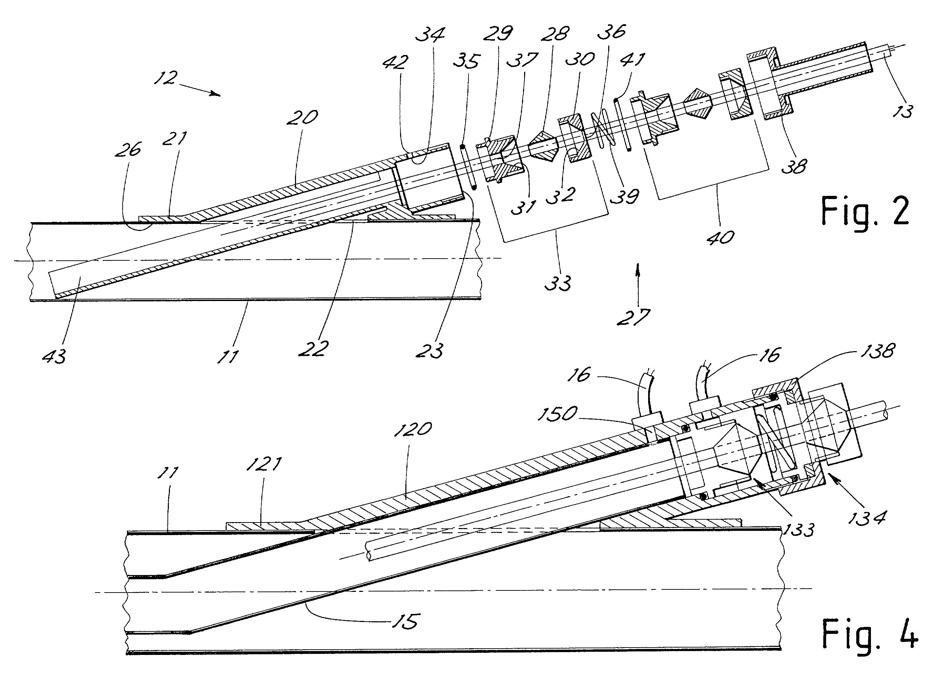

FIG 2 shows a partial exploded cross section of a first embodiment of a component 12 for sealed passage of an optical fiber cable through the wall of a fluid transport tube.

As shown in the figure, the component 12 comprising a sleeve 20 designed to be traversed by the optical fiber cable 13 and having a first end 21 designed to be seal connected on the tube wall at a passage 22 in the tube wall and a second end 23 opposite the first and which is for exit of the cable into the environment.

The first end 21 of the sleeve has a surface 26 designed for support and sealed connection on the external wall of the tube around the passage 22. Advantageously the surface 26 is part of a clamp union made up of two half shells or cylindrical sections 24, 25 as seen in FIG 1 mutually bolted to clamp the tube between them. The hydraulic seal can be provided either by gaskets between the surface 26 and the tube wall or by adhesives. In addition the surface 26 can have a known heat-melting joint system (not shown). The sleeve also comprises seal means 27 between the first and second ends to allow exit of the fiber without loss of fluid. As may be seen in FIG 2 the seal means 27 comprise at least a first gasket 28 for the cable and designed to surround a cable section inside the sleeve and axial compression members 29, 30 of the gasket to produce its radial sealing expansion around the cable. The first gasket 28 has a generically olive shape.

In the advantageous embodiment shown the gasket compression members comprise two hollow bushes 29, 30 axial with the sleeve to be traversed by the cable and screwed together with interposed gasket for the cable to receive the gasket in facing seats 31, 32 therein. Each seat is shaped to taper axially away from the gasket so as to realize tapering countersunk surfaces for radial expansion of the gasket 28. Upon tightening of the two inserts or bushes against each other the two seats draw together to clamp the gasket over the cable. The hollow bushes and the gasket thus form a seal unit 33 on the cable.

As may be seen in the assembly of FIG 3 the seal unit 33 is housed in a seat 34 in the sleeve with its own interposed gasket or O-ring 35 for sealing to the sleeve. The seal unit 33 is thrust into its seat 34 by a ringnut 38 screwed onto the second end 23 of the sleeve. To ensure long term seal elastic thrust means advantageously in the form of a helical spring 39 can be provided between the ringnut and the seal unit.

Advantageously each bush 29, 30 has one end opposite the cable gasket and having a passage 36, 37 through which the cable passes axially and which receives the cable with minimal play. This avoids distortion and possible loss of seal of the gasket 28 which could be caused by transverse stresses on the cable.

Again advantageously the seal unit 33 is made up of interchangeable members to allow fitting of the component 12 to the specific diameter of the optical fiber cable used.

Especially to offer better long term seal assurance the component 12 can advantageously comprise a second seal unit 40 similar to the first and arranged in series therewith. This second unit 40 also has a gasket or O-ring 41 for sealing on the head of the sleeve 20 and is locked between the ringnut and the sleeve head. The spring 39 reacts against the second unit 40.

As may be seen in FIGS 2 and 3, between the first and second seal unit there is advantageously in the sleeve a union 42 for access from the exterior to the internal space between the two units. With this union can be connected at intervals or better permanently a sensor 16 for detection and signaling of fluid leaks from the tube to said internal space as mentioned above.

The component 12 can also advantageously include a member for reception of at least one section of the cable extending towards the interior of the tube. Such a member, fixed or removable, can be realized for example with a generally spoon shaped member 43 to receive and guide the cable upon insertion thereof along the tube so as to facilitate interception of the cable which is run into the tube from an entry point to the exit component 12.

In FIG 2 the exit ringnut 38 is realized with a variant which causes the outermost bush of the second unit 40 to extend outward. This bush designated by reference number 45 can thus be removed if necessary for inspection or replacement of the corresponding gasket. The bush 45 can also have a tang 46 for protection of the cable exit point.

FIG 4 shows a variant of the component in accordance with the present invention. For the sake of convenience members similar to those of the above embodiment are designated by the same numbers increased by 100. There is thus a component 120 with end 121 for fastening to the tube and having seal units 133 and 134 arranged in series on the cable and held in position by a ringnut 138.

In addition to the above embodiment the component 120 includes a tube 15 as shown in broken lines in FIG 1 which extends from the sleeve to protect the entire path of the cable inside the tube. As the end of the duct is sealed in the sleeve it is possible to fit and withdraw the cable even several times for example to replace the cable with one of greater capacity with no need of emptying the tube. Cable insertion operations are also much facilitated. Advantageously there is a second union 150 for a leak detection sensor 16.

It is now clear that the predetermined purposes have been achieved by making available a network member, a component and a method of realization allowing design and realization of optical fiber networks with minimum cost and environmental impact.

To realize an optical fiber connection for a communications network it suffices to realize a passage in the fluid transport tube wall. Then it is sufficient to equip the tube with a seal component at the passage and run the cable into the passage at said seal component to utilize the tube for laying the cable. If desired, an intermediate step can be provided to arrange in the tube a duct with sealed end terminating in the seal component to receive inside it the cable in the tube and isolate it from the fluid in the tube.

Naturally the above description of an embodiment applying the innovative principles of the present invention is given by way of non-limiting example of said principles within the scope of the exclusive right claimed here. For example the exact proportions of the various parts may change depending on specific requirements. In addition, after reaching a signal processing and distribution member the cables could be again installed in the tube to continue distribution up to the next member or processing station.

## Claims

1. Network member comprising a tight fluid transport tube **characterized in that** on the wall of the tube there is a component for sealed passage of an optical fiber cable between the interior of the tube and the external environment for signal transport.

2. Network member in accordance with claim 1 comprising at least two of said components spaced along the tube for entry and exit of the cable into and from the tube near the processing and distribution members for the signal transported by the cable.

3. Network member in accordance with claim 2 **characterized in that** in the tube between the two sealed passage components is connected a duct for reception of the cable between them and isolation of the cable from the interior of the tube.

4. Network member in accordance with claim 3 **characterized in that** at least one of said sealed passage components is a union for connection inside the duct of a sensor for detection and signaling of fluid leaks from the tube towards the interior of said duct.

5. Network member in accordance with claim 1 **characterized in that** the seal components have seal leak sensors which send signals over the optical fiber cable.

6. Component for sealed passage of an optical fiber cable through the wall of a fluid transport tube comprising a sleeve designed to be traversed by the optical fiber cable and which has a first end designed to be connected in a sealed manner on the tube wall at a passage in the tube wall and a second end opposite the first and which is for exit of the cable into the environment with said sleeve comprising seal means between the first and second ends.

7. Component in accordance with claim 6 **characterized in that** said first end has a surface designed for support and sealed connection on the outer wall of the tube around the passage.

8. Component in accordance with claim 7 **characterized in that** said surface designed for support and sealed connection on the outer wall of the tube is part of a clamping union made up of two half shells mutually bolted to clamp the tube between them.

9. Component in accordance with claim 8 **characterized in that** said seal means comprise at least a first cable gasket designed to surround a section of cable inside the sleeve and axial compression members for said gasket to produce its radial sealing expansion around the cable.

10. Component in accordance with claim 9 **characterized in that** the gasket compression members comprise two hollow bushes axial with the sleeve to be traversed by the cable and screwed together with interposition of the cable gasket to receive the gasket in facing seats therein with said hollow bushes and said gasket forming a seal unit on the cable.

11. Component in accordance with claim 10 **characterized in that** each of said facing seats is shaped to taper axially away from the gasket so as to realize a countersink surface for radial expansion of the cable gasket upon movement of the two seats towards each other.

12. Component in accordance with claim 10 **characterized in that** the seal unit on the cable is housed in a seat in the sleeve with interposition of its own gasket for sealing to the sleeve.

13. Component in accordance with claim 10 **characterized in that** each bush has opposite the cable gasket an end which has a cable passage which receives the cable with minimum play.

14. Component in accordance with claim 13 **characterized in that** the seal unit is made up of interchangeable members for adaptation and to adapt the sleeve to the specific diameter of the optical fiber cable used.

15. Component in accordance with claim 10 **characterized in that** said seal unit for the cable is thrust into its seat in the sleeve by means of a ringnut screwed onto said second end of the sleeve.

16. Component in accordance with claim 14 **characterized in that** between the ringnut and said seal unit for the cable there are elastic thrust means.

17. Component in accordance with claim 15 **characterized in that** the elastic thrust means comprise a helical spring arranged axially in the sleeve.

18. Component in accordance with claim 10 **characterized in that** it comprises a second seal unit similar to the first and arranged in series therewith.

19. Component in accordance with claim 15 **characterized in that** the second seal unit projects from said ringnut to allow removal of its outermost bush without removing the ringnut.

20. Component in accordance with claim 18 **characterized in that** between the first and second seal unit there is in the sleeve a union for access from the exterior to the inner space between the two units.

21. Component in accordance with claim 20 **characterized in that** to said union is connected a detection and signaling sensor of fluid leaks from the tube to said internal space.

22. Component in accordance with claim 6 **characterized in that** from the first end extends towards the interior of the tube a member for reception of at least one cable section.

23. Component in accordance with claim 6 **characterized in that** it comprises a fixed or removable member which extends from the first end towards the interior of the tube to guide the cable towards the sleeve.

24. Component in accordance with claim 22 **characterized in that** it comprises a union for access to the internal space of said member for reception of at lest one cable section.

25. Component in accordance with claim 24 **characterized in that** to said union is connected a detection and signaling sensor of fluid leaks from the tube to said internal space.

26. Method for the realization of a communications network by means of an optical fiber cable comprising the steps of:
- realizing a passage in the wall of a fluid transport tube,
- fitting the tube with a seal component at the passage, and
- inserting the cable in the passage opposite said seal component to utilize the tube for laying the cable.

27. Method in accordance with claim 26 comprising the additional intermediate step of arranging in the tube a duct with sealed end in the seal component to receive inside it the cable in the tube and isolate it from the fluid in the tube.

28. Method in accordance with claim 26 **characterized in that** the seal component comprises a sleeve designed to be traversed by the optical fiber cable and which has one end designed to be connected and sealed on the tube wall at a passage in the tube wall and a second end opposite the first and which is for exit of the cable into the environment with said sleeve comprising seal means between the first and second ends.
